# EUROPÄISCHE PATENTSCHRIFT

(11) **EP 3 626 556 B1**
(45) Veröffentlichungstag und Bekanntmachung des Hinweises auf die Patenterteilung: **31.01.2024**
(21) Anmeldenummer: 19198199.2
(22) Anmeldetag: 19.09.2019
(51) Int. Cl.: B60C 23/04, B60C 23/06, B60T 8/88

(54) **VERFAHREN ZUR NOTFALLREAKTION BEI EINEM REIFENDRUCKVERLUST, SOWIE FAHRZEUG**
VEHICLE AND METHOD FOR EMERGENCY RESPONSE IN THE EVENT OF A TYRE PRESSURE LOSS
PROCÉDÉ DE RÉACTION D'URGENCE EN CAS DE PERTE DE PRESSION DE PNEU AINSI QUE VÉHICULE

(30) Priorität: 24.09.2018 DE 102018216257
(43) Veröffentlichungstag der Anmeldung: 25.03.2020
(73) Patentinhaber: Volkswagen AG, 38440 Wolfsburg (DE)
(72) Erfinder: Diedrich, Mathias, 38165 Lehre (DE)

(56) Entgegenhaltungen:
- EP-A1- 2 698 265
- EP-A1- 3 118 072
- WO-A1-01/60644
- DE-A1- 10 316 074
- DE-A1-102015 206 144
- US-A- 2 155 903
- US-A1- 2008 262 784
- US-A1- 2017 277 182
- US-B1- 6 571 481

## Beschreibung

Die Erfindung betrifft eine Verfahren zur Notfallreaktion bei einem Reifendruckverlust bei einem Fahrzeug, sowie ein Fahrzeug, insbesondere zum autonomen Fahren.

Wenn ein Reifen eines Fahrzeuges einen Druckverlust erleidet, kann dies insbesondere bei hohen Geschwindigkeiten zu kritischen Situationen führen. So kann ein Reifendruckverlust beispielsweise die Lenkung des Fahrzeuges beeinflussen und damit die Steuerung des Fahrzeuges für den Fahrer erschweren. So muss der Fahrer oftmals gegensteuern, um das Fahrzeug unter Kontrolle zu halten und entscheiden, ob der Reifenschaden so groß ist, dass eine Weiterfahrt nicht möglich ist. In diesem Fall muss ggf. eine geeignete Stelle gefunden werden, an welcher das Fahrzeug möglichst sicher aus dem laufenden Verkehr gebracht werden kann. Dies erfordert somit eine hohe Aufmerksamkeit des Fahrers sowie Erfahrung, um richtig zu reagieren. Bei autonom fahrenden Fahrzeugen kann es ferner problematisch sein, dass das Fahrzeug selbstständig auf eine solche Situation reagieren muss.

Es ist daher wünschenswert, dass das Fahrzeug einen Reifendruckverlust erkennen und ggf. eine Notfallreaktion durchführen kann. Aus dem Stand der Technik ist es z.B. aus der EP 2 818 340 A1 bekannt, einen Reifendruckverlust zu erkennen, indem ein Radius des Rades gemessen und bei einem zu geringen Radius auf eine Beschädigung des Reifens geschlossen wird. Dabei wird der Einfluss des beschädigten Reifens auf das Chassis genutzt, wobei Sensoren zur Abstandsmessung zu einem Untergrund vorgesehen sind, um den Radius des Reifens zu erkennen. Insbesondere bei unterschiedlichen Untergründen kann dabei jedoch eine notwendige Fehlerkorrektur aufwendig sein und daher eine hohe Rechenkapazität erfordern. Weiterhin kann das Chassis des Fahrzeugs aufgrund fahrdynamischer Effekte zu Ungenauigkeiten führen und damit ggf. die Zuverlässigkeit der Erkennung des Reifendruckverlustes negativ beeinflussen. Darüber hinaus handelt es sich bei solchen Sensoren um zusätzliche Sensoren des Fahrzeugs, welche speziell für den Einsatz der Reifenkontrolle verwendet werden.

Aus der EP 3 118 072 A1 ist ferner eine Vorrichtung zur Durchführung eines Bremsvorgangs bei einem beschädigten Reifen bekannt. Verfahren zum Überwachen eines Reifendrucks durch einen Neigungssensor sind aus den Dokumenten US 2008/262784 A1, US 2 155 903 A sowie US 6 571 481 B1 bekannt.

Es ist daher eine Aufgabe der vorliegenden Erfindung, voranstehende aus dem Stand der Technik bekannte Nachteile zumindest teilweise zu beheben. Insbesondere ist es eine Aufgabe der vorliegenden Erfindung bei einem Reifendruckverlust eines Fahrzeugs in einfacher und kostengünstiger Art und Weise eine Notfallreaktion zuverlässig zu ermöglichen und damit die Sicherheit des Fahrzeugs zu erhöhen.

Die voranstehende Aufgabe wird gelöst durch ein Verfahren zur Notfallreaktion mit den Merkmalen des Anspruchs 1 sowie durch ein Fahrzeug mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Erfindungsgemäß umfasst das Verfahren zur Notfallreaktion bei einem Reifendruckverlust eines Fahrzeuges folgende Schritte:
- Erfassen eines Reifendrucks an einem Rad des Fahrzeugs,
- Erfassen eines Neigungswinkels an einer dem Rad zugeordneten Achse des Fahrzeugs,
- Erkennen einer Notsituation in Abhängigkeit von einer Korrelation des Reifendrucks und des Neigungswinkels,
- Bestimmen eines Notbremsmanövers des Fahrzeugs in Abhängigkeit von der Notsituation.

Insbesondere handelt es sich bei dem Fahrzeug um ein Kraftfahrzeug. Unter dem Reifendruck kann insbesondere der Luftdruck in einem am Rad montierten Reifen verstanden werden. Ferner erfolgt das Erfassen des Reifendrucks vorzugsweise durch einen Reifendrucksensor und das Erfassen des Neigungswinkels durch einen Neigungssensor. Der Reifendrucksensor kann dabei zum direkten oder indirekten Messen des Reifendrucks ausgebildet sein. Zur direkten Messung des Reifendrucks kann der Reifendrucksensor beispielsweise an dem Rad angeordnet sein und einen Luftdrucksensor, insbesondere einen Piezo-Sensor oder dergleichen, aufweisen. Zur indirekten Messung des Reifendrucks kann der Reifendrucksensor beispielsweise Teil eines Sensorsystems sein und den Reifendruck über Schwingungsfrequenzen, Beschleunigungssignale, Raddrehzahlen und/oder dergleichen rechnerisch ermitteln. Zur Erfassung des Neigungswinkels an der Achse kann vorgesehen sein, dass ein Neigungssensor zur Messung des Neigungswinkels direkt an der Achse und/oder einer Radaufhängung des Fahrzeugs angeordnet ist. Insbesondere kann unter dem Neigungswinkel somit die Achsneigung des Fahrzeugs verstanden werden. Die Achse kann eine durchgehende Achse sein oder einen Achszapfen aufweisen, an welchem das Rad montiert ist. Unter der dem Rad zugeordneten Achse kann insbesondere eine Achse verstanden werden, an welcher das Rad gelagert ist und/oder um welche das Rad dreht. Durch die Erfassung des Neigungswinkels an der Achse kann der erfasste Reifendruck verifiziert werden. Ferner gibt der Neigungswinkel Aufschluss über das Steuerverhalten, insbesondere das aufgrund eines Reifenschadens abweichende Steuerverhalten, des Fahrzeugs, so dass das Steuerverhalten beim Bestimmen des Notbremsmanövers rechnerisch antizipiert werden kann. Die Notsituation kann einen Reifenschaden umfassen, aufgrund dessen der Reifen geplatzt ist oder wesentlich an Luft verloren hat. Insbesondere wird die Notsituation daher erkannt, wenn die Korrelation des Reifendrucks und des Neigungswinkels kritisch ist, d.h. beispielsweise wenn der Reifendruck einen kritischen Reifendruck unterschreitet und gleichzeitig der Neigungswinkel einen kritischen Neigungswinkel überschreitet. Vorzugsweise kann ein kritischer Neigungswinkel bei einem Neigungswinkel von größer oder gleich 10° erkannt werden. Die Korrelation kann somit insbesondere als Zusammenhang zwischen dem Reifendruck und dem Neigungswinkel verstanden werden, wobei beide Parameter beim Erkennen der Notsituation berücksichtigt werden. Das Bestimmen des Notbremsmanövers kann eine Berechnung eines optimierten Bremszeitpunktes, eines Bremsortes und/oder einer Bremskraft umfassen. Dadurch kann das Fahrzeug in Abhängigkeit von der Notfallsituation sowie ggf. weiteren Parametern sicher zum Stillstand gebracht werden. Insbesondere kann die Notfallreaktion somit ein Erkennen der Notsituation und ein Bereitstellen von Informationen zur Bewältigung der Notsituation umfassen.

Ferner ist es denkbar, dass bei dem Bestimmen des Notbremsmanövers eine Bremskraft für die einzelnen Räder des Fahrzeugs bestimmt wird. In Abhängigkeit vom Bestimmen des Notbremsmanövers kann beispielsweise ein Fahrassistenzsystem, wie beispielsweise eine Fahrdynamikregelung, insbesondere ein Elektronisches Stabilitätsprogramm, angesteuert werden. Durch das Notbremsmanöver kann das Fahrzeug daher in sicherer Art und Weise zum Stillstand gebracht werden. Somit kann durch ein erfindungsgemäßes Verfahren die Sicherheit des Fahrzeugs gesteigert sein, indem dem Fahrer Informationen über die aktuelle Notsituation und/oder eine mögliche Steuerungsreaktion zur Verfügung gestellt werden und/oder indem ein Fahrassistenzsystem in Abhängigkeit von der Notsituation angesteuert wird. Durch die Verwendung von radnahen Parametern, d.h. durch Verwendung der Korrelation des Reifendrucks und des Neigungswinkels an der Achse, kann eine hohe Zuverlässigkeit im Erkennen der Notsituation erreicht werden.

Weiterhin kann vorteilhafterweise vorgesehen sein, dass zum Erfassen des Neigungswinkels an der Achse eine Verstellung eines Exzenters überwacht wird. Die Achsneigung kann somit auf die Stellung des Rades schließen lassen und damit einen Indikator mit einer hohen Genauigkeit für einen Reifenschaden darstellen. Vorzugsweise kann der Neigungswinkel auf einer Achsseite mit einem Neigungswinkel auf der gegenüberliegenden Achsseite des Fahrzeugs verglichen werden, um festzustellen, ob hier ein einseitiger Reifenschaden vorliegt. Der Exzenter kann beispielsweise durch die Achse oder eine Messhülse gebildet sein. Wird der Exzenter ausgelenkt, weil sich die relative Position des Rades zur Fahrzeugkarosserie verändert, kann die Verstellung gemessen und auf den Neigungswinkel geschlossen werden. Es ist ferner denkbar, dass das Erfassen des Neigungswinkels des Fahrzeugs durch eine kapazitive und/oder induktive Messung durchgeführt wird. Berührungslose Sensoren bieten den Vorteil, dass eine Relativbewegung zweier Sensorteile lagerfrei ausgestaltet sein kann, so dass sich bei einer hohen Genauigkeit kein oder kaum Verschleiß ergibt.

Vorzugsweise kann bei einem erfindungsgemäßen Verfahren ferner das Verfahren folgenden Schritt umfassen:
- Validieren des Erkennens der Notsituation, insbesondere wobei der Reifendruck und/oder der Neigungswinkel über einen vordefinierten Zeitraum erfasst wird.

Das Validieren des Erkennens der Notsituation kann beispielsweise einen Vergleich des erfassten Reifendrucks, an welchem eine Notsituation zunächst erkannt wurde, mit einem weiteren Reifendruck eines weiteren Rades des Fahrzeuges umfassen. Ferner kann das Validieren des Erkennens der Notsituation durch ein Erfassen des Reifendrucks und/oder des Neigungswinkels über einen vordefinierten Zeitraum erfolgen. Dadurch können auffällige Messwerte ausgeschlossen werden, welche lediglich von der momentanen Fahrsituation abhängig sind und folglich nur temporär vorliegen, ohne dass das Fahrzeug einen tatsächlichen Reifenschaden aufweist. Der vordefinierte Zeitraum kann in Abhängigkeit von der vorläufig erkannten Notsituation bestimmt werden oder insbesondere werkseitig vorgegeben sein. Unter der Erfassung über den vordefinierten Zeitraum kann eine kontinuierliche oder diskontinuierliche Erfassung verstanden werden. So ist es denkbar, dass lediglich am Ende des vordefinierten Zeitraums ein weiterer Messwert erhoben wird, um festzustellen, ob noch immer eine kritische Situation vorliegt. Der Reifendruck und/oder der Neigungswinkel kann jedoch auch über den vordefinierten Zeitraum als Messkurve erfasst werden. Somit stellt die Validierung einen weiteren Sicherheitsschritt dar, so dass Fehler aufgrund fehlerhafter Messungen oder besonderer Fahrsituationen reduziert oder ausgeschlossen werden können. Insbesondere können daher ausschließlich der Reifendruck und der Neigungswinkel zum Erkennen der Notsituation genutzt werden, während weitere Messdaten zur Validierung einfließen. Das Erkennen der Notsituation kann daher insbesondere auch vorläufig sein und ggf. durch das Validieren wieder aufgehoben werden. Dadurch kann der Rechenaufwand zunächst gering gehalten werden und erst dann mit der Validierung vergrößert werden, wenn ein Indiz für das Vorliegen eines Reifendruckverlustes tatsächlich vorliegt.

Weiterhin kann bei einem erfindungsgemäßen Verfahren vorteilhafterweise vorgesehen sein, dass das Verfahren folgenden Schritt umfasst:
- Überwachen einer Fahrzeugumgebung durch eine Umfeldsensorik,
wobei die Fahrzeugumgebung beim Bestimmen des Notbremsmanövers des Fahrzeugs berücksichtigt wird. Die Überwachung der Fahrzeugumgebung kann dabei eine Erkennung weiterer Verkehrsteilnehmer umfassen. Sollte beispielsweise erkannt werden, dass ein Verkehrsteilnehmer dicht auf das Fahrzeug auffährt, kann das Notbremsmanöver zunächst ein Absetzen eines Warnsignals über einen definierten Zeitraum vorsehen, bevor das Fahrzeug abgebremst wird. Weiterhin können in der Fahrzeugumgebung Hindernisse oder dergleichen erkannt und damit beim Bestimmen des Notbremsmanövers berücksichtigt werden. Insbesondere bei einem autonom fahrenden Fahrzeug kann das Notbremsmanöver eine Routen- und/oder Bremswegplanung des Fahrzeugs umfassen, und dabei ein Ausweichen und/oder eine Vollbremsung vorsehen. Die Umfeldsensorik kann vorzugsweise einen optischen Sensor, wie z.B. eine Kamera, einen Radar-Sensor, einen Ultraschall-Sensor und/oder einen Lidar-Sensor umfassen. Besonders bevorzugt ist die Umfeldsensorik dazu ausgebildet die Fahrzeugumgebung um 360° um das Fahrzeug zu erfassen. Dadurch kann eine zuverlässige Überwachung der Fahrzeugumgebung gewährleistet werden und somit die Sicherheit des Fahrzeugs beim Notbremsmanöver erhöht sein. Ferner kann beim Bestimmen des Notbremsmanövers ein Einhalten eines Mindestabstands zu einem weiteren Verkehrsteilnehmer vorgesehen sein. Dazu kann die Umfeldsensorik vorteilhafterweise ein Abstandskontrollsystem umfassen.

Ferner ist es denkbar, dass bei einem erfindungsgemäßen Verfahren das Verfahren folgenden Schritt umfasst:
- Identifizieren einer Nothalteposition durch die Umfeldsensorik und/oder eine Positionserkennungseinheit des Fahrzeugs,
insbesondere wobei das Bestimmen des Notbremsmanövers ein Bestimmen einer Anfahrt des Fahrzeugs zur Nothalteposition umfasst. Die Nothalteposition kann beispielsweise einen Parkplatz, einen günstigen Stellplatz am Straßenrand oder eine Nothaltebucht umfassen. Das Bestimmen der Anfahrt zur Nothalteposition kann eine Routenplanung umfassen, welche in Abhängigkeit von der Notsituation einen möglichst sicheren Weg, insbesondere unter Berücksichtigung eines durch die Notsituation beeinflussten Fahrzeugverhaltens, aufweist. Die zuvor bestimmte Anfahrt kann einem Fahrer des Fahrzeugs über ein Navigationsgerät und/oder über ein Head-Up-Display angezeigt werden. Dadurch kann dem Fahrer bei Eintreten der Notsituation eine Unterstützung geboten werden, indem dem Fahrer der Vorschlag der Anfahrt zur Nothalteposition aufgezeigt wird. Bei einem autonom fahrenden Fahrzeug kann die Anfahrt zur Nothalteposition zur Durchführung eines automatischen Fahrmanövers, insbesondere des Notbremsmanövers, genutzt werden. Die Positionserkennungseinheit kann beispielsweise einen GPS-Empfänger aufweisen, um die Position des Fahrzeugs zu erkennen und mit Daten über Nothaltepositionen abzugleichen. Insbesondere kann die nächstgelegene Nothalteposition über die Positionserkennungseinheit lokalisiert werden und durch die Umfeldsensorik z.B. in den Abmessungen bei der Anfahrt erkannt werden.

Im Rahmen der Erfindung kann weiterhin vorgesehen sein, dass das Verfahren folgenden Schritt umfasst:
- Erfassen eines Schlupfes des Rades,
wobei der Schlupf beim Bestimmen des Notbremsmanövers berücksichtigt wird. Der Schlupf kann auf einen Griplevel des Rades schließen lassen, so dass das Fahrverhalten des Rades erfasst werden kann. Ferner kann ein elektronisches Stabilitätsprogramm entsprechend des Schlupfes angesteuert werden. So ist es beispielsweise denkbar, dass bei einem Reifenschaden am linken Vorderrad des Fahrzeugs das rechte Vorderrad entsprechend angesteuert, d.h. z.B. abgebremst, wird, um eine Fahrstabilität des Fahrzeuges zu erhalten. Weiterhin kann der Schlupf zur Validierung des Erkennens der Notsituation eingesetzt werden. So kann ein vollständig zerstörter Reifen einen charakteristischen Griplevel aufweisen, welcher zur Verifikation der Korrelation des Neigungswinkels und des Reifendrucks genutzt werden kann.

Es ist weiterhin denkbar, dass das Verfahren folgenden Schritt umfasst:
- Ausgeben von Anweisungen an einen Fahrer des Fahrzeugs zum Durchführen des Notbremsmanövers über eine Anzeigeeinheit ausgegeben werden.

Die Anzeigeeinheit kann ein Head-Up-Display und/oder ein Navigationssystem des Fahrzeugs umfassen. So ist es denkbar, dass die Anweisungen Teile des Notbremsmanövers oder das gesamte Notbremsmanöver umfassen. Beispielsweise kann dem Fahrer bei einem autonom fahrenden Fahrzeug ein Signal gegeben werden, dass dieser in die Steuerung des Fahrzeugs eingreifen soll. Anschließend kann der Fahrer durch die Anweisungen angeleitet werden, das Notbremsmanöver durchzuführen. Die Notfallreaktion kann somit beispielsweise umfassen, dass das Notbremsmanöver dem Fahrer zumindest teilweise vorgeschlagen oder vorgegeben wird, so dass dieser unabhängig von seiner Fahrerfahrung in der Einschätzung und/oder Bewältigung der Notsituation unterstützt wird.

Es ist bei einem erfindungsgemäßen Verfahren ferner denkbar, dass das Fahrzeug zum autonomen Fahren ausgebildet ist, wobei das Verfahren folgenden Schritt umfasst:
- Automatisches Durchführen des Notbremsmanövers.

Unter einem Fahrzeug zum autonomen Fahren kann ein Fahrzeug verstanden werden, welches zum eigenständigen Fahren, d.h. insbesondere ohne Eingriff eines Fahrers, ausgebildet ist. Vorzugsweise weist das Fahrzeug dabei zumindest ein Fahrassistenzsystem auf, welches über die Umfeldsensorik eine Fahrzeugumgebung erkennen kann und entsprechend notwendige Fahrmanöver durchführen kann. Durch die automatische Durchführung des Notbremsmanövers ist ein Eingriff eines Fahrers in dieser Situation nicht notwendig. Das Fahrzeug kann eigenständig z.B. eine Nothalteposition erkennen und ansteuern und/oder bei hoher Instabilität des Fahrverhaltens aufgrund der Notsituation das Fahrzeug stoppen.

Im Rahmen der Erfindung kann ferner vorgesehen sein, dass das Verfahren zumindest einen der folgenden Schritte umfasst:
- Ausgeben eines optischen Warnsignals an Verkehrsteilnehmer,
- Senden eines Notsignals an Verkehrsteilnehmer und/oder an eine zentrale Leitstelle.

Unter Verkehrsteilnehmern können beispielsweise weitere Fahrzeuge, Fußgänger, Radfahrer oder dergleichen verstanden werden. Das optische Warnsignal kann vorteilhafterweise das Setzen eines Blinkers oder das Einschalten einer Warnblinkanlage umfassen. Dadurch können die Verkehrsteilnehmer über die Notsituation informiert bzw. gewarnt werden, insbesondere bevor das Notbremsmanöver durchgeführt wird. Das Senden des Notsignals kann vorzugsweise ein Senden eines Funksignals an die Verkehrsteilnehmer und/oder an die zentrale Leitstelle umfassen. Das Funksignal kann ein WLAN-Signal, Mobilfunksignal und/oder dergleichen umfassen. So ist es denkbar, dass die Verkehrsteilnehmer, insbesondere wenn es sich bei dem Fahrzeug und/oder den Verkehrsteilnehmern um autonom fahrende Fahrzeuge handelt, durch das Notsignal über die Notsituation informiert werden. Insbesondere können dabei auch Detailinformationen über die Notsituation, wie z.B. die Lokalisierung des Reifenschadens, das Notbremsmanöver und/oder das daraus zu erwartende Fahrverhalten des Fahrzeugs, gesendet werden. Dadurch können die Verkehrsteilnehmer das Verhalten des Fahrzeugs antizipieren und ggf. darauf reagieren. Durch ein Senden des Notsignals an eine zentrale Leitstelle kann diese über die Notsituation informiert werden und ggf. Hilfsmaßnahmen, wie z.B. das Entsenden eines Unfallhilfewagens oder dergleichen, einleiten. Darüber hinaus kann über die zentrale Leitstelle eine Verkehrssteuerung, z.B. durch frühzeitige Umleitungen, verbessert werden, so dass ein ggf. durch den Reifenschaden zu erwartender Stau reduziert werden kann.

Die beschriebenen Verfahrensschritte können vorzugsweise in der beschriebenen Reihenfolge oder in einer anderen Reihenfolge ausgeführt werden. Insbesondere können einzelne oder alle Schritte des Verfahrens wiederholt werden.

Gemäß einem weiteren Aspekt der Erfindung ist ein Fahrzeug, insbesondere zum autonomen Fahren, beansprucht. Dabei weist das Fahrzeug einen Reifendrucksensor zum Erfassen eines Reifendrucks an einem Rad des Fahrzeugs und einen Neigungssensor zum Erfassen eines Neigungswinkels an einer dem Rad zugeordneten Achse des Fahrzeugs auf. Ferner umfasst das Fahrzeug eine Steuereinheit, welche zum Durchführen eines erfindungsgemäßen Verfahrens ausgebildet ist.

Damit bringt ein erfindungsgemäßes Fahrzeug die gleichen Vorteile mit sich, wie sie ausführlich mit Bezug auf ein erfindungsgemäßes Verfahren beschrieben worden sind. Insbesondere kann das Fahrzeug zum vollständig autonomen Abfahren von Wegstrecken ausgebildet sein oder zum automatischen Durchführen einzelner Fahrmanöver. Die Steuereinheit kann vorzugsweise ein zentrales Steuergerät aufweisen. Es ist jedoch ebenfalls denkbar, dass die Steuereinheit dezentral vorgesehen ist und insbesondere mehrere Steuergeräte umfasst. Ferner kann die Steuereinheit einen Prozessor und/oder ein eingebettetes System zum Durchführen des Verfahrens aufweisen. Durch die Durchführung des erfindungsgemäßen Verfahrens können somit insbesondere bereits zumindest teilweise vorhandene Sensoren eines Fahrzeugs genutzt werden, um eine Notfallreaktion durchzuführen. Dadurch kann die Sicherheit des Fahrzeugs in kostengünstiger und einfacher Art und Weise gesteigert sein. Auch eine Nachrüstung des Fahrzeugs bzw. der Steuereinheit kann vorteilhafterweise ermöglicht sein.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Dabei ist zu beachten, dass die Figuren nur beschreibenden Charakter haben und nicht dazu gedacht sind, die Erfindung in irgendeiner Form einzuschränken. Es zeigen:
- Figur 1: ein erfindungsgemäßes Verfahren in schematischer Darstellung von Verfahrensschritten in einem ersten Ausführungsbeispiel,
- Figur 2: eine Verkehrssituation unter Anwendung des erfindungsgemäßen Verfahrens des ersten Ausführungsbeispiels in schematischer Darstellung,
- Figur 3: ein erfindungsgemäßes Fahrzeug in schematischer Darstellung gemäß dem ersten Ausführungsbeispiel,
- Figur 4: einen zeitlichen Verlauf eines Reifendrucks eines Fahrzeugs bei einem Reifendruckverlust in schematischer Darstellung in einem zweiten Ausführungsbeispiel,
- Figur 5: einen zeitlichen Verlauf eines Neigungswinkels des Fahrzeugs bei einem Reifendruckverlust in schematischer Darstellung gemäß dem zweiten Ausführungsbeispiel.

In den nachfolgenden Figuren werden für die gleichen technischen Merkmale auch von unterschiedlichen Ausführungsbeispielen die identischen Bezugszeichen verwendet.

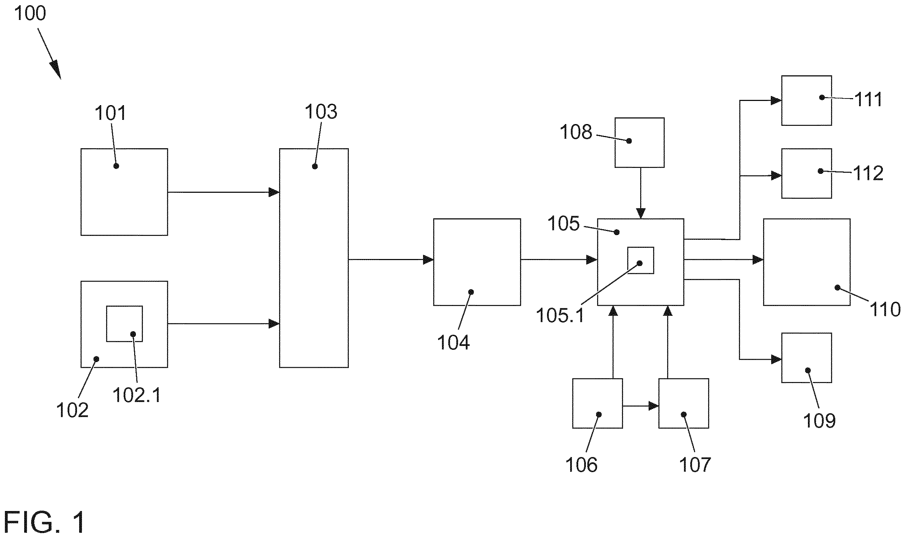

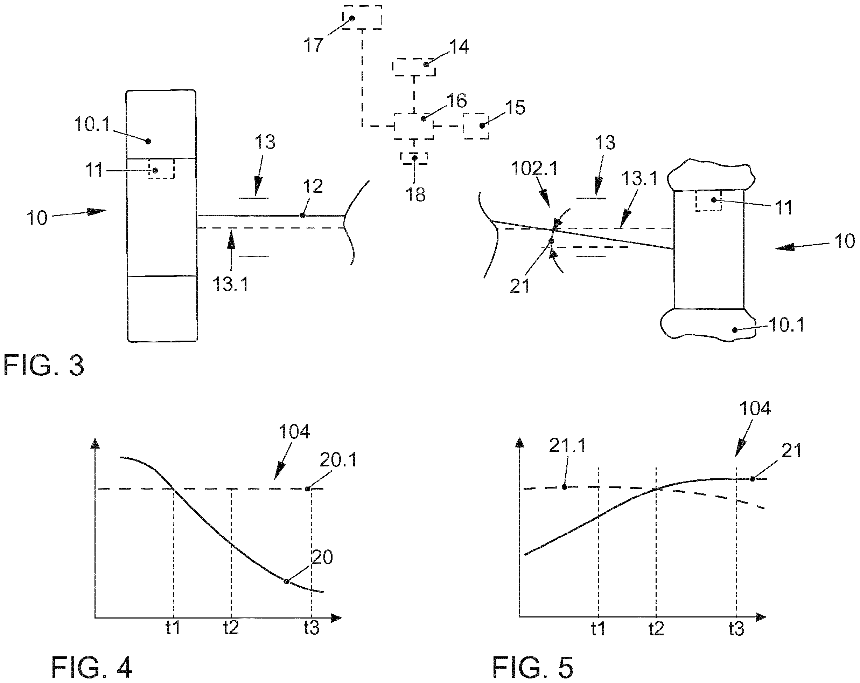

Figur 1 zeigt ein erfindungsgemäßes Verfahren 100 zur Notfallreaktion bei einem Reifendruckverlust eines erfindungsgemäßen Fahrzeugs 1 in schematischer Darstellung der Verfahrensschritte in einem ersten Ausführungsbeispiel. Das Fahrzeugs 1 ist schematisch in Figur 3 dargestellt. Das Verfahren 100 umfasst ein Erfassen 101 eines Reifendrucks 20 an einem Rad 10 und ein Erfassen 102 eines Neigungswinkels 21 an einer dem Rad 10 zugeordneten Achse 12 des Fahrzeugs 1. Das Erfassen 102 des Neigungswinkels 21 an der Achse 12 des Fahrzeugs 1 erfolgt vorzugsweise durch eine kapazitive und/oder induktive Messung. Insbesondere kann eine Verstellung 102.1 eines Exzenters 13.1 überwacht werden, um den Neigungswinkel 21 messtechnisch aufzunehmen. Daraufhin wird eine Korrelation des Reifendrucks 20 und des Neigungswinkel 21 erstellt und/oder erkannt und in Abhängigkeit von der Korrelation erfolgt ein Erkennen 103 einer Notsituation. Die Notsituation kann z.B. ein verändertes Fahrverhalten aufgrund eines Reifendruckverlustes oder ein langsames Fortschreiten eines Reifendruckverlustes umfassen. Vorteilhafterweise ist nach dem Erkennen 103 der Notsituation aufgrund des Reifendrucks 20 und des Neigungswinkels 21 zunächst ein Validieren 104 des Erkennens 103 vorgesehen. Durch das Validieren 104 kann die Zuverlässigkeit des Verfahrens 100 erhöht werden, indem beispielsweise ausgeschlossen werden kann, dass der erfasste Reifendruck 20 und der erfasste Neigungswinkel 21 auf ein einmaliges Fahrereignis, wie z.B. ein Schlagloch, zurückzuführen sind. Insbesondere kann das Validieren 104 dazu ein dauerhaftes oder wiederholtes Erfassen 101, 102 des Reifendrucks 20 und des Neigungswinkels 21 über einen vordefinierten Zeitraum umfassen.

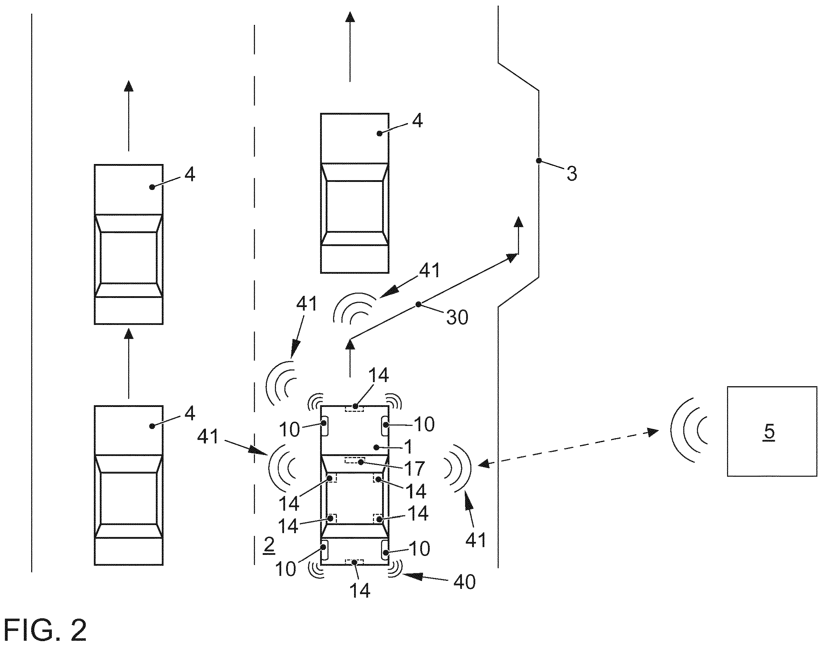

Nach dem Validieren 104 umfasst das Verfahren 100 ferner ein Bestimmen 105 eines Notbremsmanövers 30 des Fahrzeugs in Abhängigkeit von der Notsituation. Ein mögliches Notbremsmanöver 30 ist in Figur 2 dargestellt. So kann vorgesehen sein, dass je nach Schwere des Reifendruckverlustes das Notbremsmanöver 30 unterschiedlich errechnet wird. Beispielsweise kann bei einem plötzlichen Platzen eines Reifens 10.1 des Rades 10 ein schnelles Abbremsen des Fahrzeugs 1 vorgesehen sein, während bei einem schleichenden Reifendruckverlust das Notbremsmanöver 30 ein kontrolliertes Ansteuern einer Nothalteposition 3 vorgesehen sein kann. Vorteilhafterweise kann bei dem Notbremsmanöver 30 ferner eine Fahrzeugumgebung 2 berücksichtigt werden. Dazu ist ein Überwachen 106 der Fahrzeugumgebung 2 durch eine Umfeldsensorik 14 des Fahrzeugs 1 vorgesehen. Dadurch können Informationen über Verkehrsteilnehmer 4 und/oder Hindernisse in die Bestimmung 105 des Notbremsmanövers 30 einfließen, so dass das Notbremsmanöver 30 ggf. an die Verkehrssituation bzw. die Fahrzeugumgebung 2 angepasst werden kann. Ferner ist zum Ansteuern der Nothalteposition 3 ein Identifizieren 107 der Nothalteposition 3 durch die Umfeldsensorik 14 des Fahrzeugs 1 vorgesehen. Dazu können optisch erfasste Daten der Umfeldsensorik 14 mit Referenzbildern typischer Nothaltepositionen 3, wie z.B. Nothaltebuchten, abgeglichen werden. Zusätzlich oder alternativ ist es denkbar, dass das Fahrzeug 1 eine Positionserkennungseinheit 18 aufweist, wobei anhand der durch die Positionserkennungseinheit 18 gewonnenen Positionsdaten des Fahrzeugs 1 eine nächstgelegene Nothalteposition 3 ermittelt werden kann. Nach dem Identifizieren 107 der Nothalteposition 3 kann ein Bestimmen 105.1 einer Anfahrt zur Nothalteposition 3 durchgeführt und in die Bestimmung 105 des Notbremsmanövers 30 integriert werden. Figur 2 zeigt hierzu eine entsprechende Route des Fahrzeugs 1 zur Nothalteposition 3. Weiterhin kann beim Bestimmen 105 des Notbremsmanövers 30 ein Schlupf des Rades 10 bzw. des Reifens 10.1 berücksichtigt werden. Dazu erfolgt insbesondere ein Erfassen 108 des Schlupfes des Rades 10. Der Schlupf kann beispielsweise über ein elektronisches Stabilitätsprogramm erfasst werden. So kann der Schlupf auf einen Griplevel des Reifens 10.1 schließen lassen, welcher wiederum Einfluss auf das Fahrverhalten des Fahrzeugs 1 hat. Wird der Schlupf daher beim Bestimmen 105 des Notbremsmanövers 30 berücksichtigt, kann das Fahrverhalten des Fahrzeugs 1 unter einem vorliegenden Reifendruckverlust besser vorhergesagt und damit darauf reagiert werden. Vorzugsweise kann ein Ausgeben 109 von Anweisungen an einen Fahrer des Fahrzeugs 1 über eine Anzeigeeinheit 17, wie z.B. ein Head-Up-Display und/oder ein Navigationssystem, zum Durchführen des Notbremsmanövers 30 erfolgen, um den Fahrer in der Notsituation anzuleiten. Handelt es sich bei dem Fahrzeug 1 um ein autonom fahrendes Fahrzeug oder ein zumindest teilweise autonom fahrendes Fahrzeug 1, kann ein Automatisches Durchführen 110 des Notbremsmanövers 30 vorgesehen sein. Somit ist es nicht notwendig, dass ein Fahrer zur Durchführung des Notbremsmanövers 30 eingreift, sondern das Notbremsmanöver 30 kann auch durch das Fahrzeug 1 selbstständig durchgeführt werden. Hierzu ist es insbesondere besonders vorteilhaft, dass durch ein erfindungsgemäßes Verfahren 100 eine Vielzahl von Messdaten bereitgestellt werden können. Damit auch weitere Verkehrsteilnehmer 4 ihr Fahrverhalten auf die Notsituation des Fahrzeugs 1 einstellen können, können diese gewarnt werden. Dabei ist ein Ausgeben 111 eines optischen Warnsignals 40 und/oder ein Senden 112 eines Notsignals 41 an die Verkehrsteilnehmer 4 vorgesehen. Dadurch können die Verkehrsteilnehmer 4 darüber informiert werden, dass eine Notsituation vorliegt, wobei über das Notsignal 41, welches insbesondere ein Funksignal umfasst, ggf. noch weitere Informationen, wie das geplante Notbremsmanöver 30 oder dergleichen übersandt werden können. Weiterhin kann eine Kommunikation mit einer zentralen Leitstelle 5 vorgesehen sein, welche durch Informationen über die Notsituation des Fahrzeugs 1 Verkehr umleiten kann oder Hilfsmaßnahmen, wie das Entsenden eines Unfallhilfewagens, einleiten kann.

Figur 3 zeigt einen schematischen Ausschnitt des Fahrzeugs 1 in schematischer Ansicht. Das Fahrzeug 1 weist eine Steuereinheit 16 auf, welche zum Durchführen des erfindungsgemäßen Verfahrens 100 zur Notfallreaktion bei einem Reifendruckverlust gemäß dem ersten Ausführungsbeispiel ausgebildet ist. Die Steuereinheit 16 kann ein zentrales Steuergerät des Fahrzeugs 1 und/oder ein oder mehrere dezentrale Steuergeräte aufweisen. Ferner steht die Steuereinheit 16 mit einer elektronischen Stabilitätskontrolle 15 in Kommunikationsverbindung, so dass beispielsweise ein Schlupf eines Reifens 10.1 beim Notbremsmanöver 30 berücksichtigt werden kann und/oder eine Ansteuerung der elektronischen Stabilitätskontrolle 15 in Abhängigkeit von der Bestimmung 105 des Notbremsmanövers 30 vorgenommen werden kann. Wie dargestellt, weist der vordere linke Reifen 10.1 des Fahrzeugs 1 einen Reifenschaden auf, während der gegenüberliegende, vordere rechte Reifen 10.1 noch intakt ist. Entsprechend unterscheiden sich die Achspositionen der jeweils den Reifen 10.1 zugeordneten Räder 10. So weist die Achse 12 am Rad 10 des beschädigten Reifens 10.1 einen Neigungswinkel 21 zur Horizontalen bzw. zur gegenüberliegenden Seite am Rad 10 des unbeschädigten Reifens 10.1 auf. Je nach Ausgestaltung der Radaufhängung bzw. des Fahrwerks des Fahrzeuges 1 kann die Neigung auch beidseitig vorliegen, so dass der Neigungswinkel 21 zwischen den sich gegenüberliegenden Rädern 10 durchgehend vorliegt. Der Neigungswinkel 21 kann an der Achse 12 durch zumindest einen Neigungssensor 13 aufgenommen werden, welcher einen Exzenter 13.1 umfasst. Neigt sich somit die Achse 12 zumindest einseitig, verstellt sich der Exzenter 13.1, wobei die Verstellung 102.1 vorzugsweise kapazitiv oder induktiv erfasst wird. Insbesondere kann der Neigungswinkel 21 dadurch nicht nur in einer Ebene, sondern auch räumlich erfasst werden, da der Exzenter 13.1 hier den Raum zur Verstellung 102.1 in mehrere Richtungen bieten kann. Zum Erfassen 101 des Reifendrucks 20 der jeweiligen Reifen 10.1 sind ferner Reifendrucksensoren 11 vorgesehen, die jeweils an den Rädern 10 angebracht sind. Zusätzlich oder alternativ kann der Reifendruck 20 durch die Steuereinheit 16 erfasst werden, wobei der Reifendruck 20 über weitere Messdaten, wie z.B.

Radschwingungen, indirekt ermittelt wird. Insbesondere zur Überwachung 106 der Fahrzeugumgebung 2 und/oder zur Identifikation 107 der Nothalteposition 3 steht die Steuereinheit 16 ferner mit der Umfeldsensorik 14 und/oder der Positionserkennungseinheit 18 in Kommunikationsverbindung.

Figur 4 zeigt ferner schematisch einen zeitlichen Verlauf eines Reifendrucks 20 und Figur 5 zeigt schematisch einen zeitlichen Verlauf eines Neigungswinkels 21 an einer Achse 12 eines Fahrzeugs 1. Dabei unterschreitet der Reifendruck 20 zu einem ersten Zeitpunkt t1 einen kritischen Reifendruck 20.1, welcher somit einen Grenzwert bildet. Zu einem zweiten Zeitpunkt t2 überschreitet der Neigungswinkel 21 einen kritischen Neigungswinkel 21.1, welcher ebenfalls einen Grenzwert bildet. Insbesondere liegt der zweite Zeitpunkt t2 nach dem ersten Zeitpunkt t1, wenn der Reifendruck 20 langsam abfällt und sich in der Folge eine Achse 12 des Fahrzeugs 1 absenkt. Der zweite Zeitpunkt t2 kann auch nahezu identisch mit dem ersten Zeitpunkt t1 sein, z.B. wenn der Reifen 10.1 plötzlich platzt. Somit weisen der Neigungswinkel 21 und der Reifendruck 20 eine Korrelation, d.h. beispielsweise einen zeitlichen Zusammenhang, auf. So liegen beide kritische Messwerte 20.1, 21.1 zumindest zum zweiten Zeitpunkt t2 gleichzeitig vor. Vorliegend folgt ferner das Erreichen des kritischen Neigungswinkels 21.1 bereits nach kurzer Zeit auf das Erreichen des kritischen Reifendrucks 20.1. Somit kann auf das Vorliegen einer Notsituation infolge eines Reifendruckverlustes des Fahrzeugs 1 geschlossen werden. Darüber hinaus kann ein Validieren 104 erfolgen, um auszuschließen, dass es sich um einen temporären Effekt, z.B. aufgrund eines Schlagloches, handelt. Hierzu werden der Reifendruck 20 und der Neigungswinkel 21 bis zu einem dritten Zeitpunkt t3 erfasst und die Notsituation wird insbesondere dann verifiziert wenn nicht zumindest der Reifendruck 20 und/oder der Neigungswinkel 21 den kritischen Bereich wieder verlässt.

Die voranstehende Erläuterung der Ausführungsformen beschreibt die vorliegende Erfindung ausschließlich im Rahmen von Beispielen. Selbstverständlich können Änderungen innerhalb des durch die nachstehenden Ansprüche definierten Schutzumfangs der vorliegenden Erfindung vorgenommen werden.

### Bezugszeichenliste

- 1: Fahrzeug
- 2: Fahrzeugumgebung
- 3: Nothalteposition
- 4: Verkehrsteilnehmer
- 5: Leitstelle

- 10: Rad
- 10.1: Reifen
- 11: Reifendrucksensor
- 12: Achse
- 13: Neigungssensor
- 13.1: Exzenter
- 14: Umfeldsensorik
- 15: elektronische Stabilitätskontrolle
- 16: Steuereinheit
- 17: Anzeigeeinheit
- 18: Positionserkennungseinheit

- 20: Reifendruck
- 20.1: kritischer Reifendruckwert
- 21.1: kritischer Neigungswinkel
- 21: Neigungswinkel

- 30: Notbremsmanöver

- 40: optisches Warnsignal
- 41: Notsignal

- 100: Verfahren
- 101: Erfassen von 20
- 102: Erfassen von 21
- 102.1: Verstellung von 13.1
- 103: Erkennen einer Notsituation
- 104: Validieren
- 105: Bestimmen von 30
- 106: Überwachen von 2
- 107: Identifizieren von 3
- 108: Erfassen von Schlupf
- 109: Ausgeben von Anweisungen
- 110: Automatisches Durchführen von 30
- 111: Ausgeben von 40
- 112: Senden von 41

- t1-t3: Zeitpunkte

## Patentansprüche

1. Verfahren (100) zur Notfallreaktion bei einem Reifendruckverlust eines Fahrzeugs (1) umfassend folgende Schritte:
- Erfassen (101) eines Reifendrucks (20) an einem Rad (10) des Fahrzeugs (1),
- Erfassen (102) eines Neigungswinkels (21) an einer dem Rad (10) zugeordneten Achse (12) des Fahrzeugs (1),
- Erkennen (103) einer Notsituation in Abhängigkeit von einer Korrelation des Reifendrucks (20) und des Neigungswinkels (21),
- Bestimmen (105) eines Notbremsmanövers (30) des Fahrzeugs (1) in Abhängigkeit von der Notsituation.

2. Verfahren (100) nach Anspruch 1, wobei zum Erfassen (102) des Neigungswinkels (21) an der Ache (12) eine Verstellung (102.1) eines Exzenters (13.1) überwacht wird.

3. Verfahren (100) nach Anspruch 1 oder 2, wobei das Verfahren (100) folgenden Schritt umfasst:
- Validieren (104) des Erkennens (103) der Notsituation, insbesondere wobei der Reifendruck (20) und/oder der Neigungswinkel (21) über einen vordefinierten Zeitraum erfasst wird.

4. Verfahren (100) nach einem der vorhergehenden Ansprüche, wobei das Verfahren (100) folgenden Schritt umfasst:
- Überwachen (106) einer Fahrzeugumgebung (2) durch eine Umfeldsensorik (14), wobei die Fahrzeugumgebung (2) beim Bestimmen (105) des Notbremsmanövers (30) des Fahrzeugs (1) berücksichtigt wird.

5. Verfahren (100) nach einem der vorhergehenden Ansprüche, wobei das Verfahren (100) folgenden Schritt umfasst:
- Identifizieren (107) einer Nothalteposition (3) durch die Umfeldsensorik (14) und/oder eine Positionserkennungseinheit (18) des Fahrzeugs (1),
insbesondere wobei das Bestimmen (105) des Notbremsmanövers (30) ein Bestimmen (105.1) einer Anfahrt des Fahrzeugs (1) zur Nothalteposition (3) umfasst.

6. Verfahren (100) nach einem der vorhergehenden Ansprüche, wobei das Verfahren (100) folgenden Schritt umfasst:
- Erfassen (108) eines Schlupfes des Rades (10),
wobei der Schlupf beim Bestimmen (105) des Notbremsmanövers (30) berücksichtigt wird.

7. Verfahren (100) nach einem der vorhergehenden Ansprüche, wobei das Verfahren folgenden Schritt umfasst:
- Ausgeben (109) von Anweisungen an einen Fahrer des Fahrzeugs (1) zum Durchführen des Notbremsmanövers (30) über eine Anzeigeeinheit (17).

8. Verfahren (100) nach einem der vorhergehenden Ansprüche, wobei das Fahrzeug (1) zum autonomen Fahren ausgebildet ist, wobei das Verfahren (100) folgenden Schritt aufweist:
- Automatisches Durchführen (110) des Notbremsmanövers (30).

9. Verfahren (100) nach einem der vorhergehenden Ansprüche, wobei das Verfahren (100) zumindest einen der folgenden Schritte umfasst:
- Ausgeben (111) eines optischen Warnsignals (40) an Verkehrsteilnehmer (4),
- Senden (112) eines Notsignals (41) an Verkehrsteilnehmer (4) und/oder an eine zentrale Leitstelle (5).

10. Fahrzeug (1), insbesondere zum autonomen Fahren, aufweisend
einen Reifendrucksensor (11) zum Erfassen eines Reifendrucks (20) an einem Rad (10) des Fahrzeugs (1),
einen Neigungssensor (13) zum Erfassen eines Neigungswinkels (21) an einer dem Rad (10) zugeordneten Achse (12) des Fahrzeugs (1) und
eine Steuereinheit (16), die zum Durchführen eines Verfahrens (100) nach einem der vorhergehenden Ansprüche ausgebildet ist.

## Claims

1. Method (100) for an emergency response in the event of a loss of tyre pressure of a vehicle (1) including the following steps:
- detecting (101) a tyre pressure (20) on a wheel (10) of the vehicle (1),
- detecting (102) an angle of inclination (21) on an axle (12) of the vehicle (1) associated with the wheel (10),
- detecting (103) an emergency situation depending on a correlation of the tyre pressure (20) and the angle of inclination (21),
- determining (105) an emergency braking manoeuvre (30) of the vehicle (1) depending on the emergency situation.

2. Method (100) according to Claim 1,
wherein,
to detect (102) the angle of inclination (21) on the axle (12), a displacement (102.1) of an eccentric element (13.1) is monitored.

3. Method (100) according to Claim 1 or 2,
wherein
the method (100) includes the following step:
- validating (104) the detection (103) of the emergency situation, in particular wherein the tyre pressure (20) and/or the angle of inclination (21) is/are recorded over a predefined period of time.

4. Method (100) according to any one of the preceding claims,
wherein
the method (100) includes the following step:
- monitoring (106) a vehicle environment (2) by an environment sensor (14),
wherein the vehicle environment (2) is taken into account when determining (105) the emergency braking manoeuvre (30) of the vehicle (1).

5. Method (100) according to any one of the preceding claims,
wherein the method (100) includes the following step:
- identifying (107) an emergency stop position (3) by the environment sensor (14) and/or a position detection unit (18) of the vehicle (1),
in particular wherein determining (105) the emergency braking manoeuvre (30) includes a determination (105.1) of a vehicle's (1) approach to the emergency stop position (3).

6. Method (100) according to any one of the preceding claims,
wherein
the method (100) includes the following step:
- detecting (108) slipping of the wheel (10),
wherein the slip is taken into account when determining (105) the emergency braking manoeuvre(30).

7. Method (100) according to any one of the preceding claims,
wherein
the method includes the following step:
- issuing (109) instructions to a driver of the vehicle (1) to perform the emergency braking manoeuvre (30), via a display unit (17).

8. Method (100) according to any one of the preceding claims,
wherein
the vehicle (1) is designed for autonomous driving, wherein the method (100) has the following step:
- automatically performing (110) the emergency braking manoeuvre (30).

9. Method (100) according to any one of the preceding claims,
wherein
the method (100) includes at least one of the following steps:
- issuing (111) a visual warning signal (40) to road users (4),
- sending (112) an emergency signal (41) to road users (4) and/or to a central control centre (5).

10. Vehicle (1), in particular for autonomous driving, comprising
a tyre pressure sensor (11) for detecting a tyre pressure (20) on a wheel (10) of the vehicle (1),
an inclination sensor (13) for detecting an angle of inclination (21) on an axle (12) of the vehicle (1) associated with the wheel (1) and
a control unit (16) that is designed to perform a method (100) according to any one of the preceding claims.

## Revendications

1. Procédé (100) de réaction d'urgence en cas de perte de pression d'un pneu d'un véhicule (1), comprenant les étapes suivantes consistant à :
- détecter (101) une pression de pneu (20) au niveau d'une roue (10) du véhicule (1),
- détecter (102) un angle d'inclinaison (21) au niveau d'un essieu (12) du véhicule (1), associé à la roue (10),
- identifier (103) une situation d'urgence en fonction d'une corrélation entre la pression de pneu (20) et l'angle d'inclinaison (21),
- déterminer (105) une manoeuvre de freinage d'urgence (30) du véhicule (1) en fonction de la situation d'urgence.

2. Procédé (100) selon la revendication 1, dans lequel un déplacement (102.1) d'un excentrique (13.1) est surveillé afin de détecter (102) l'angle d'inclinaison (21) au niveau de l'essieu (12).

3. Procédé (100) selon la revendication 1 ou 2, dans lequel le procédé (100) comprend l'étape suivante consistant à :
- valider (104) l'identification (103) de la situation d'urgence, dans lequel la pression de pneu (20) et/ou l'angle d'inclinaison (21) sont détectés en particulier pendant une période de temps prédéfinie.

4. Procédé (100) selon l'une quelconque des revendications précédentes, dans lequel le procédé (100) comprend l'étape suivante consistant à :
- surveiller (106) un environnement de véhicule (2) par un système de capteurs d'environnement (14), dans lequel l'environnement de véhicule (2) est pris en compte pour la détermination (105) de la manoeuvre de freinage d'urgence (30) du véhicule (1).

5. Procédé (100) selon l'une quelconque des revendications précédentes, dans lequel le procédé (100) comprend l'étape suivante consistant à :
- identifier (107) une position d'arrêt d'urgence (3) par le système de capteurs d'environnement (14) et/ou une unité de reconnaissance de position (18) du véhicule (1),
dans lequel la détermination (105) de la manoeuvre de freinage d'urgence (30) comprend en particulier une détermination (105.1) d'une approche du véhicule (1) de la position d'arrêt d'urgence (3).

6. Procédé (100) selon l'une quelconque des revendications précédentes, dans lequel le procédé (100) comprend l'étape suivante consistant à :
- détecter (108) un patinage de la roue (10),
dans lequel le patinage est pris en compte pour la détermination (105) de la manoeuvre de freinage d'urgence (30).

7. Procédé (100) selon l'une quelconque des revendications précédentes, dans lequel le procédé comprend l'étape suivante consistant à :
- émettre (109) des instructions à destination d'un conducteur du véhicule (1) pour effectuer la manoeuvre de freinage d'urgence (30), par l'intermédiaire d'une unité d'affichage (17).

8. Procédé (100) selon l'une quelconque des revendications précédentes, dans lequel le véhicule (1) est réalisé pour la conduite autonome, dans lequel le procédé (100) présente l'étape suivante consistant à :
- effectuer automatiquement (110) la manoeuvre de freinage d'urgence (30).

9. Procédé (100) selon l'une quelconque des revendications précédentes, dans lequel le procédé (100) comprend au moins l'une des étapes suivantes consistant à :
- émettre (111) un signal d'avertissement optique (40) à destination des usagers de la route (4),
- envoyer (112) un signal d'urgence (41) aux usagers de la route (4) et/ou à un centre de contrôle centralisé (5).

10. Véhicule (1), en particulier pour la conduite autonome, présentant
un capteur de pression de pneu (11) pour détecter une pression de pneu (20) au niveau d'une roue (10) du véhicule (1),
un capteur d'inclinaison (13) pour détecter un angle d'inclinaison (21) au niveau d'un essieu (12) du véhicule (1), associé à la roue (10), et
une unité de commande (16) qui est réalisée pour effectuer un procédé (100) selon l'une quelconque des revendications précédentes.
